# EUROPEAN PATENT SPECIFICATION

(11) **EP 2 868 290 B1**
(45) Date of publication and mention of the grant of the patent: **14.10.2020**
(21) Application number: 14190511.7
(22) Date of filing: 27.10.2014
(51) Int. Cl.: A61C 7/08, A61C 7/12, A61C 7/10

(54) **Orthodontic device**
Orthodontische Vorrichtung
Dispositif orthodontique

(30) Priority: 01.11.2013 GB 201319341
(43) Date of publication of application: 06.05.2015
(73) Proprietor: Tal, Nimrod, London NW1 3AX (GB)
(72) Inventor: Tal, Nimrod, London NW1 3AX (GB)
(74) Representative: Greaves Brewster LLP

(56) References cited:
- KR-A- 20120 061 789
- US-A- 5 975 893
- US-A1- 2004 009 449
- US-A1- 2009 098 500
- US-A1- 2010 279 245
- US-B1- 8 356 993

## Description

### Field of the Invention

The present invention relates generally to orthodontic appliances and treatments. In particular, it relates to dental positioning aligners or devices allowing incremental movement of teeth, as well as to continuous tooth movements appliances. It also relates to methods of making and using such appliances.

### Background to the Invention

There is a constant desire to improve the available appliances and associated treatments for correcting problems related to the teeth, such problems including cross-bites, overcrowding, and rotated, intruded, extruded, lingually or labially placed teeth. Examples of existing orthodontic appliances for treating such problems include components for applying corrective forces to the labial or lingual surfaces of the teeth identified for treatment. Although many of the available devices are able to bring about the desired correction, there is still room for improvement.

Available devices generally fall into three groups. The devices of the first group use fixed, generally immovable labial or lingual components. Such devices tend to include at least one labial or one lingual appliance which will usually include brackets that hold arch wires. Each bracket is bonded to each tooth individually using a special composite. In general, devices of this nature must be periodically adjusted to re-establish the desired forces on the teeth targeted for treatment. Adjustments are usually made by bending or replacing the labial or lingual wires. A number of adjustments may be required, and each adjustment may involve a number of changes to the position, thickness and shape of the wires, in order to ensure exactly the right result is achieved. This requires skill and experience on the part of the orthodontist or technician and may result in some discomfort for the patient. The difficulties associated with adjusting such devices are directly related to limitations of their design and the severity of the mal occlusion.

The second group are traditional removable appliances. These appliances can be taken out of the mouth by the practitioner for adjustment or by the patient for eating or cleaning. They are usually made of acrylic base plate, stainless steel wires in the shape of hooks and cribs, to retain the appliance to the teeth and a variety of springs and screws which are designed to move teeth individually or as a group. All the wire components and the screws are either imbedded in the base plate or connected to it to generate the force required for moving the teeth.

The third group of devices provides alternatives to the conventional fixed or removable orthodontic appliances. A series of preformed appliances is available from Align Technology, Inc., San Jose, CA, under the tradename Invisalign® System. This system is described in, for example, U.S. Pat. Nos. 6,450,807, and 5,975,893. Using the Invisalign® System, an orthodontist or technician designs and may make, or have made, a number of aligners to be worn by a patient. The aligners are devices which fit over the teeth. Usually, computer-based three dimensional models of the patient's existing tooth position and desired tooth position are produced and a number of successive tooth arrangements between the existing and desired tooth positions are designed. Aligners are produced to move the teeth from the existing to desired positions, via the planned successive arrangements.

The Invisalign® System and similar aligners represented a significant advancement in the way orthodontic problems can be corrected; however, not all problems can be treated using either that system, or the conventional fixed system. There is still a need for improvement in the available technologies. In particular, there is a need for devices that combine the advantages of the fixed system with those of the aligner system.

US20100279245 describes a method of forming an orthodontic appliance. The method includes forming an arch configured to custom fit a plurality of teeth, coupling a plurality of wire receptors to at least two of: a first surface of the arch corresponding to the lingual surfaces of the plurality of teeth; a second surface of the arch corresponding to the labial surfaces of the plurality of teeth; and a third surface of the arch corresponding to the occusal surfaces of the plurality of teeth.

Korean application KR 20120061789 discloses an orthodontic appliance with an anchor and a shell connected by a wire.

### Summary of the Invention

The present invention is defined solely by the appended independent claim. Preferred embodiments are defined in the dependent claims.

References to "embodiments" throughout the description, where the embodiments do not fall under the scope of the appended claims, merely represent possible exemplary variations of the claimed subject matter. Such embodiments do not form part of the present invention.

It is an object of the present invention to provide an orthodontic appliance.

The present invention provides an appliance comprising at least one shell for receiving at least one tooth for repositioning, the shell comprising a tooth receiving cavity, in which, during use, the tooth may sit and further comprising a wire receiving member for receiving a connecting wire, and an anchor characterised in that the shell is made up of a number of individual caps, each cap comprising a wire receiving member for receiving a connecting wire, and wherein the anchor is a base plate or bar.

The shell may receive one or more teeth, and may include a series of tooth receiving cavities, one for each of the teeth that will sit, in use, within the shell. The shell comprises a number of caps each of which sit on a different tooth. The shell is preferably able to exert a pressure on the tooth or teeth it receives, when a force is applied to the shell. Accordingly, the shell is preferably made of a resilient material that does not deform significantly when a force is applied to it, but rather transmits that force, or the majority of the force, to the tooth or teeth. The shell may be made of any appropriate material, but must be compatible with being worn by a patient in the mouth. For example the material may be polymeric, such as a biocompatible plastic, particularly an acrylic resin.

The shell also comprises at least one wire receiving member, such as a bracket or tube, for receiving a wire to connect the shell to another part of the device or a different device. The appliance may be provided with or comprise a wire mounted on or connected to a wire receiving member. When placed on the tooth, the shell has a lingual side facing the tongue, a labial side, facing the lips or cheeks and an occlusion surface which is generally parallel with or found over the biting surface of the covered tooth, i.e. the surface of the tooth that is intended to interact with the teeth on the opposite jaw. A wire receiving member is preferably found on either or both of the labial and lingual surfaces of the shell. The wire receiving member may be mounted upon, or formed integrally with the shell. In other words, it may be produced as a separate component and attached to the shell, or may be formed as part of, such as within the wall of, the shell. The wire receiving member may be a tube, for example having a round or square cross-section. It could be an eyelet or loop. Differently shaped and sized wire receiving members may be found on different cap and may be chosen to best fit the wire to be received.

The device may additionally comprise one or more connecting wires or cables. The wire or cable may be formed separately from the shell or shells or may be integral to one or more of the shells. Such wires or cables may be made of any appropriate material. The material should be biocompatible, that is to say it should be capable of being worn within the patient's mouth without causing harm. Appropriate materials include biocompatible plastics and metals, especially shape-memory polymers, plastics or metals.

The device further comprises an anchor or support region for holding the appliance in place as another portion of the appliance, particularly the shell, applies force against the tooth or teeth targeted for repositioning. The anchor region is a base plate or bar which fits against part of the mouth, especially the soft tissue of the mouth, such as the roof of the mouth or the sublingual area, and may comprise a second or further tooth receiving shell. In some cases, many or most, and even all, of the teeth will be repositioned at some point during treatment depending on the aligner configuration at the time. Teeth that are moved at one point during treatment (e.g., moved teeth) can be used to support the appliance and vice versa, throughout the course of the appliance(s) being worn by the patient. Accordingly, the device may comprise more than one shell, at any time any one of the shells being used as an anchor and any other of the shells being using to exert pressure on a tooth or teeth to be moved.

The anchor is a base plate or a bar and it may be provided with a number of base plate caps to cover teeth that are not to be moved. Those base plate caps may be part of the base plate or bar or may be connected to it, by, for example, a bar. Typically, those caps are to cover one or more of the second premolar, and first and second molar teeth. Other caps, especially for teeth that are to be moved, may be connected either to the base plate or bar, or to the caps covering teeth to be moved.

Accordingly, there is provided an orthodontic appliance comprising two or more shells, each for receiving at least one tooth, each shell comprising a tooth receiving cavity, in which, during use, the tooth may sit and each further comprising a wire receiving member for receiving a connecting wire.

Ideally the appliance fits sufficiently closely on the teeth that no further attachment or support is required; however, in some cases, it may be advantageous to provide additional support to enhance the retention of the appliance. Accordingly, individual tooth anchors may be provided on one or more of the teeth and the tooth receiving cavities may be provided with corresponding pockets or receptacles, to engage with the tooth anchors. Conventional anchors may be used.

The appliance may be provided as part of a set or series of appliances.

A set of appliances may comprise two appliances, one to be worn on each jaw of the patient. Accordingly, there is provided a set of appliances, each comprising at least one shell for receiving at least one tooth for repositioning, the shell comprising a tooth receiving cavity, in which, during use, the tooth may sit and further comprising a wire receiving member for receiving a connecting wire, and an anchor.

A series of appliances may comprise two or more appliances designed to aid the movement of the patient's teeth from an original position to a desired or target position, potentially via one or more intermediate positions. Accordingly, there is provided a series of appliances comprising at least one shell for receiving at least one tooth for repositioning, the shell comprising a tooth receiving cavity, in which, during use, the tooth may sit and further comprising a wire receiving member for receiving a connecting wire, and an anchor.

As indicated above, when the appliance is provided as part of a series of appliances, each appliance may be configured so as to provide a series of adjustments for moving the teeth from their original position to a desired position, via a number of intermediate positions. Each appliance may be configured such that the geometry and position of each tooth receiving cavity, especially in relation to the base plate or anchor, corresponds to an intermediate position or final desired position of the tooth with which the cavity is to engage. The appliances can then be used in order so as to progressively reposition the teeth.

The starting position of the teeth can be identified by scanning and modelling of the patient's mouth. The desired position of the teeth, and intermediate positions between the starting and desired positions may be designed using 3d computer based modelling. All those positions may be set at the outset, or intermediate positions may be refined during treatment, depending upon the progress of the treatment programme.

The aligner appliances can be generated all at the same time or in sets or batches. The patient wears each appliance for a fixed length of time as instructed by their prescribing clinician, typically up to 20 hours a day, and from 10-21 days for each appliance. After wearing the appliance for the amount of time prescribed by the clinician, the patient may move onto the next appliance in the series. This is repeated until the series of the appliances has completed, or until the desired position has been reached, or until a new prescription is made. If a satisfactory treatment outcome is not reached from the initial appliance or series, additional appliances may be fabricated and worn.

The invention also provides methods of producing a device according to the invention. The method may comprise 3D printing of such a device, or moulding, or a combination of the two. In particular, the method may comprise cold 3D printing which may be used to confer additional strength on the printed components.

### Brief description of the drawings

The preferred embodiments of the invention will hereinafter be described in conjunction with the appended drawings provided to illustrate and not to limit the invention. The drawings are:
Figure 1 *-* a view towards the occlusion surface of a device according to the invention and

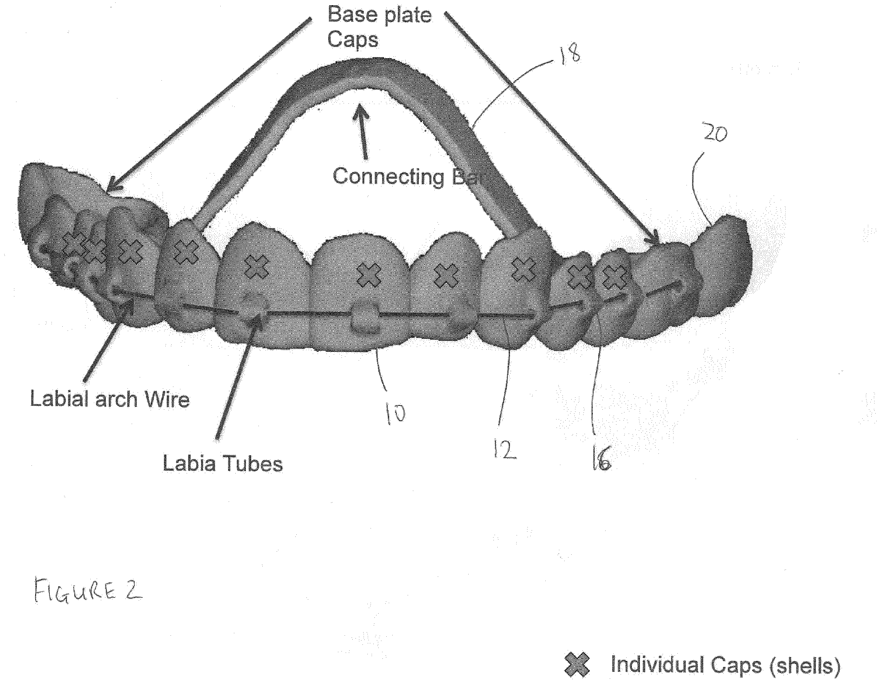

Figure 2 - a front view of a device according to the invention.

### Detailed description of the Invention

Examples of aspects of the invention follow. Some or all may be found in the various possible embodiments of the invention.

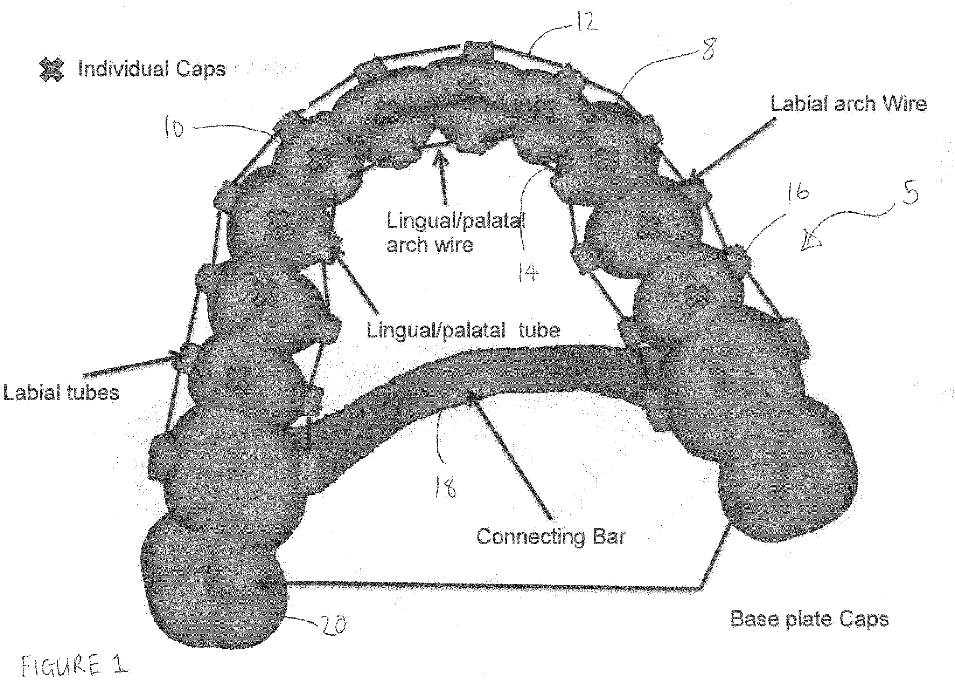

Referring to figure 1, a device according to the invention 5 comprises a shell 8, made up of a number of individual caps. As shown in the figures, the device may comprise caps to cover most or all of the teeth in the mouth. The caps to cover teeth to be moved may be connected to each other by at least one wire, 12 and 14. The wire may be found labially, 12 or lingually, 14. The wire is in connection with the caps by virtue of tubes or brackets 16, found on or in the surface of the caps. The wires are used to exert force onto the caps to move the teeth. In order to provide stability and structure and an anchor against which that force might be transmitted, the device may also comprise a base plate or bar 18. The base plate or bar may be provided with or comprise base plate caps 20, which fit over teeth that are not to be moved. The base plate caps may be formed integrally with the base plate or bar or may be mounted there on. In use, the base plate or bar rests against the roof of the mouth or sublingually. The wire or wires may be connected to the base plate or bar or to the base plate caps by way of brackets found on the base plate, bar or base plate caps. The brackets may be any appropriate form of bracket to allow connection of the wires. For example, the bracket may comprise a tube, into or through which the wire is inserted. The wire may be bent back on itself, around the tube, to hold it in place, or a glue, such as a composite glue may be applied to hold it in place.

In use, the device is produced to fit into the patient's mouth, with the caps being positioned over the teeth. The wires may then be adjusted by tightening or loosening them in order to exert a force, via the caps, on the teeth to be moved. Depending on the amount of movement required, different wires may be selected, with thinner wires being used to bring about more movement and thicker wires being chosen when finer, more precise movement is required. The device may be used in isolation, or may be part of a set or series of devices to be used. When used as part of a set, two devices may be provided; one for each jaw. When used as part of a series, a number of devices may be used in succession, so as to allow the caps to closely fit the teeth at each stage of the adjustment and to allow the teeth to be moved accurately.

The device may be made in a number of different ways, depending on the material to be used for the device. For example, the device may be printed or moulded. The method of making the device will usually comprise a number of the following steps. The patient's existing tooth position is identified, for example by scanning. A 3D model of this may be created, for example using computer based modelling. A physical model of the teeth may then be produced, for example by 3D printing. The desired, or aligned, position of the teeth may be mapped to produce a 3D model, again using computer based techniques. This may be the final position of the teeth, or an intermediate position between the existing position and the final position desired. A physical model of the aligned teeth may then be produced, again, for example by 3D printing. One or more devices may then be designed, using, for example, orthodontic design software. A physical version of the device may then be produced, by for example 3D printing of the device. Alternatively, a mould of the device may be created, again optionally by using 3D design software. A physical version of the mould may then be printed. The mould may be injected or otherwise filled with the material that is to be used to make the device and the material allowed to set.

## Claims

1. An appliance comprising at least one shell (8) 8- for receiving at least one tooth for repositioning, the shell comprising a tooth receiving cavity, in which, during use, the tooth may sit; and further comprising a wire receiving member for receiving a connecting wire, and an anchor (18), **characterised in that** the shell is made up of a number of individual caps (10), each of which sit on a different tooth, each cap comprising a wire receiving member for receiving a connecting wire, wherein the anchor is a base plate or bar and wherein the base plate or bar sits against the soft tissue of the mouth.

2. An appliance according to claim 1, wherein the bar or base plate is provided with one or more base plate caps for receiving a tooth.

3. An appliance according to any preceding claim, wherein the shell comprises more than one tooth receiving cavities.

4. An appliance according to any preceding claim, wherein the shell comprises at least one tooth receiving cavity that is capable of receiving more than one tooth.

5. An appliance according to any preceding claim, wherein a wire receiving member is found on the lingual side of the shell.

6. An appliance according to any preceding claim, wherein a wire receiving member is found on the labial side of the shell.

7. An appliance according to any preceding claim, wherein wire receiving members are found on both the lingual and labial sides of the shell.

8. An appliance according to any preceding claim, further comprising at least one connecting wire.

9. A set or series of appliances according to any preceding claim.

10. A method of producing an orthodontic device, comprising 3D printing or injection moulding a device according to any of claims 1 to 9.

## Patentansprüche

1. Vorrichtung, umfassend wenigstens eine Schale (8) zur Aufnahme wenigstens eines Zahns zum Repositionieren, wobei die Schale einen Zahnaufnahmehohlraum umfasst, in dem der Zahn während des Gebrauchs sitzen kann, und weiter ein Drahtaufnahmeelement zur Aufnahme eines Verbindungsdrahtes sowie einen Anker (18) umfassend,
**dadurch gekennzeichnet, dass** die Schale aus einer Anzahl individueller Kappen (10) aufgebaut ist, die jeweils auf einem anderen Zahn sitzen, wobei jede Kappe ein Drahtaufnahmeelement zur Aufnahme eines Verbindungsdrahtes aufweist, wobei der Anker eine Basisplatte oder eine Strebe ist und wobei die Basisplatte oder die Strebe am Weichgewebe des Mundes anliegt.

2. Vorrichtung nach Anspruch 1, wobei die Strebe oder Basisplatte mit einer oder mehreren Basisplattenkappen zur Aufnahme eines Zahns versehen ist.

3. Vorrichtung nach einem vorhergehenden Anspruch, wobei die Schale mehr als einen Zahnaufnahmehohlraum umfasst.

4. Vorrichtung nach einem vorhergehenden Anspruch, wobei die Schale wenigstens einen Zahnaufnahmehohlraum umfasst, der mehr als einen Zahn aufnehmen kann.

5. Vorrichtung nach einem vorhergehenden Anspruch, wobei sich ein Drahtaufnahmeelement auf der Zungenseite der Schale befindet.

6. Vorrichtung nach einem vorhergehenden Anspruch, wobei sich ein Drahtaufnahmeelement auf der labialen Seite der Schale befindet.

7. Vorrichtung nach einem vorhergehenden Anspruch, wobei sich Drahtaufnahmeelemente sowohl auf der Zungen- als auch auf der labialen Seite der Schale befinden.

8. Vorrichtung nach einem vorhergehenden Anspruch, weiter wenigstens einen Verbindungsdraht umfassend.

9. Set oder eine Reihe von Geräten gemäß einem vorhergehenden Anspruch.

10. Verfahren zur Herstellung einer kieferorthopädischen Vorrichtung, umfassend 3D-Drucken oder Spritzgießen einer Vorrichtung nach einem der Ansprüche 1 bis 9.

## Revendications

1. Appareil comprenant au moins une coque (8) destinée à recevoir une dent en vue d'un repositionnement, la coque comprenant une cavité de réception de dent, dans laquelle, lors de l'utilisation, la dent peut reposer ; et comprenant en outre un élément de réception de fil destiné à recevoir un fil de raccordement, et un dispositif d'ancrage (18),
**caractérisé en ce que** la coque est constituée d'un certain nombre de capuchons individuels (10), chacun desquels reposant sur une dent différente, chaque capuchon comprenant un élément de réception de fil destiné à recevoir un fil de raccordement, ledit dispositif d'ancrage étant une plaque de base ou barre et ladite plaque de base ou barre reposant contre le tissu mou de la bouche.

2. Appareil selon la revendication 1, ladite barre ou plaque de base étant dotée d'un ou plusieurs capuchons de plaque de base destinés à recevoir une dent.

3. Appareil selon l'une quelconque des revendications précédentes, ladite coque comprenant plus d'une cavités de réception de dent.

4. Appareil selon l'une quelconque des revendications précédentes, ladite coque comprenant au moins une cavité de réception de dent qui peut recevoir plus d'une dent.

5. Appareil selon l'une quelconque des revendications précédentes, ledit élément de réception de fil se trouvant du côté lingual de la coque.

6. Appareil selon l'une quelconque des revendications précédentes, ledit élément de réception de fil se trouvant du côté labial de la coque.

7. Appareil selon l'une quelconque des revendications précédentes, des éléments de réception de fil se trouvant aussi bien du côté lingual que du côté labial de la coque.

8. Appareil selon l'une quelconque des revendications précédentes, comprenant en outre au moins un fil de raccordement.

9. Ensemble ou série d'appareils selon l'une quelconque des revendications précédentes.

10. Procédé de production d'un dispositif orthodontique, comprenant l'impression 3D ou le moulage par injection d'un dispositif selon l'une quelconque des revendications 1 à 9.
